# EUROPEAN PATENT APPLICATION

(11) **EP 4 844 263 A1**
(43) Date of publication of application: **25.11.2026**
(21) Application number: 26174685.3
(22) Date of filing: 27.04.2026
(51) Int. Cl.: F17C 13/04

(54) **CONNECTOR WITH OVER-TEMPERATURE AND OVER-FLOW PROTECTION STRUCTURE, GAS VALVE, AND GAS APPLIANCE**

(30) Priority: 20.05.2025 CN 202510652465
(71) Applicant: Chant Heat Energy Science Technology (Zhongshan) Co., Ltd., Zhongshan, Guangdong 528415 (CN)
(72) Inventor: Deng, Xianmin, Zhongshan City, Guangdong, 528415 (CN); Yao, Biaocheng, Zhongshan City, Guangdong, 528415 (CN); Pan, Junge, Zhongshan City, Guangdong, 528415 (CN); Mai, Guangzhi, Zhongshan City, Guangdong, 528415 (CN)
(74) Representative: Petraz, Gilberto Luigi

(57) **Abstract**

Disclosed are a connector with over-temperature and over-flow protection structure, a gas valve and a gas appliance. The connector with over-temperature and over-flow protection structure includes: a housing, the housing being provided with an airflow channel, an air inlet and an air outlet; an over-temperature and over-flow protection structure, provided in the airflow channel, including an elastic member and a blocking member, one end of the elastic member abutting against a side wall of the airflow channel, the other end abutting against the blocking member, the blocking member being configured to drive the elastic member to undergo elastic deformation in response to an intake flow rate at the air inlet being greater than a preset flow rate, so as to at least achieve a reduction in a flow area of the airflow channel, or, the blocking member being configured to soften in response to an ambient temperature being greater than a preset temperature, so as to achieve blocking of the airflow channel. The connector with over-temperature and over-flow protection structure in the present invention is capable of achieving a reduction in a gas flow rate of the airflow channel in response to the flow rate at the air inlet being greater than the preset flow rate, or achieving blocking of the airflow channel in response to the ambient temperature being greater than the preset temperature, thereby leading to avoiding a situation where gas undergoes violent combustion at a burner end.

## Description

### TECHNICAL FIELD

The present invention relates to the technical field of gas valves, and particularly relates to a connector with an over-temperature and over-flow protection structure, a gas valve, and a gas appliance.

### BACKGROUND

A connector is provided at an air inlet end of a gas valve and connected to a gas cylinder, and is a member for achieving gas input from the gas cylinder to the gas valve, and is ultimately output to a gas appliance by the gas valve. However, the connector in the prior art only achieves a connection function, only guiding gas into the gas valve, having no protective effect in response to a change in external environment, such as intake pressure being excessive or ambient temperature being too high, thus leading to potential intense combustion at the gas appliance, and even a risk of fire.

### SUMMARY

To solve at least one problem existing in the above-mentioned prior art, according to a first aspect of the present invention, provided is a connector with over-temperature and over-flow protection structure, including:
a housing, where the housing is provided with an airflow channel, an air inlet, and an air outlet;
an over-temperature and over-flow protection structure, provided in the airflow channel, including an elastic member and a blocking member, where an end of the elastic member is abutted against a side wall of the airflow channel, and an opposite end of the elastic member is abutted against the blocking member, the blocking member being configured to drive the elastic member to undergo elastic deformation in response to an intake flow rate at the air inlet being greater than a preset flow rate, such that, by the deformation of the elastic member, at least a reduction in a flow area of the airflow channel is achieved, blocking of the airflow channel is achieved by movement of the blocking member; or, the blocking member is configured to soften in response to an ambient temperature being greater than a preset temperature, so as to achieve blocking of the airflow channel.

In some implementations, the airflow channel includes a first section and a second section, where an inner diameter of the first section is configured to be less than that of the second section, the first section is arranged facing the air outlet, and the second section is arranged facing the air inlet;
the elastic member is provided on the first section, the blocking member is movably provided on the second section, and is configured to move towards the first section in response to the intake flow rate at the air inlet being greater than the preset flow rate, or is configured to soften in response to the ambient temperature being greater than the preset temperature, so as to block an opening of the first section facing the second section.

In some implementations, an auxiliary flow channel is provided on the housing, where the auxiliary flow channel communicates between the first section and the second section;
the connector with over-temperature and over-flow protection structure also includes a first adjustment structure, where the first adjustment structure is adjustably provided on the auxiliary flow channel, for adjusting a magnitude of a gas flow rate flowing from the first section to the second section.

In some implementations, the airflow channel includes a first section and a second section, where an inner diameter of the first section is configured to be less than that of the second section, the first section is arranged facing the air outlet, the second section is arranged facing the air inlet, and the elastic member is an elastic sheet, and is provided at an opening of the first section facing the second section;
the elastic sheet includes an outer fixing ring and a plurality of elastic segments provided on the outer fixing ring, where the plurality of the elastic segments are configured to change from an expanded state to a retracted state under pushing by the blocking member in response to the intake flow rate at the air inlet being greater than the preset flow rate, so as to at least achieve the reduction in the flow area of the airflow channel.

In some implementations, the blocking member is spherical.

In some implementations, a receiving cavity is provided inside the blocking member;
the connector with over-temperature and over-flow protection structure further includes a first foaming assembly and a second foaming assembly, where the first foaming assembly and the second foaming assembly are provided in the receiving cavity, a melting point of the first foaming assembly and a melting point of the second foaming assembly are both lower than a melting point of the blocking member, and the first foaming assembly and the second foaming assembly are configured to foam after mixing, so as to achieve blocking of the airflow channel.

In some implementations, the blocking member includes a first covering portion and a second covering portion that are independently formed, where the first covering portion and the second covering portion enclose to form the receiving cavity.

In some implementations, the first foaming assembly includes a first foaming agent and a first coating film coating the first foaming agent;
the second foaming assembly includes a second foaming agent and a second coating film coating the second foaming agent;
a melting point of the first coating film and a melting point of the second coating film are both lower than the melting point of the blocking member.

In some implementations, a material of the first foaming agent includes polyether polyol, polymer polyol, polyether carbonate, catalyst, and flame retardant;
a material of the second foaming agent includes isocyanate.

In some implementations, a weight ratio range of the first foaming agent to the second foaming agent is 1:1 to 1:2. 1:1-1:2.

In some implementations, the connector with over-temperature and over-flow protection structure further includes a second adjustment structure, the second adjustment structure is adjustable and provided at the air inlet, abutted against the blocking member, and configured to drive the blocking member to move, so as to achieve adjustment of a compression amount of the elastic member.

According to a second aspect of the present invention, provided is a gas valve, including the aforementioned connector with over-temperature and over-flow protection structure.

According to a third aspect of the present invention, provided is a gas appliance, including the aforementioned gas valve.

In summary, the connector with over-temperature and over-flow protection structure, the gas valve, and the gas appliance provided by the present invention have the following technical effects:
By providing the over-temperature and over-flow protection structure inside the housing, the blocking member is configured to drive the elastic member to undergo elastic deformation under the drive of air pressure in response to the intake flow rate at the air inlet being greater than a preset flow rate, so as to at least achieve a reduction in the flow area of the airflow channel, thereby leading to a decrease in the amount of gas flowing out from the air outlet and avoiding the risk of intense combustion; simultaneously, in response to the external ambient temperature being greater than a preset temperature, the blocking member is configured to soften and fill within the airflow channel, achieving blockage of the airflow channel and disconnecting the outflow of gas from the air outlet, thus, protection may be performed when the ambient temperature is excessively high, avoiding the risk of intense explosion and ensuring user safety.

### BRIEF DESCRIPTION OF THE DRAWINGS

FIG. 1 is a perspective schematic diagram of a connector with over-temperature and over-flow protection structure according to Embodiment 1 of the present invention;
FIG. 2 is a structural schematic diagram of the connector with over-temperature and over-flow protection structure in FIG. 1;
FIG. 3 is a cross-sectional schematic diagram taken along line A-A in FIG. 2;
FIG. 4 is a structural schematic diagram of a blocking member, a first foaming assembly, and a second foaming assembly according to Embodiment 2 of the present invention;
FIG. 5 is an enlarged schematic diagram of portion I in FIG. 3;
FIG. 6 is a structural schematic diagram of a connector with over-temperature and over-flow protection structure according to Embodiment 5 of the present invention;
FIG. 7 is a perspective schematic diagram of an elastic member in an expanded state in FIG. 6;
FIG. 8 is a structural schematic diagram of the elastic member in FIG. 7;
FIG. 9 is a structural schematic diagram of the elastic member in a retracted state in FIG. 7.

### Reference Numerals:

100, connector with over-temperature and over-flow protection structure; 10, housing; 11, airflow channel; 111, first section; 112, second section; 12, auxiliary flow channel; 121, mounting channel; 1211, outer section; 1212, inner section; 122, inflow channel; 123, outflow channel; 14, air inlet; 13, air outlet; 20, over-temperature and over-flow protection structure; 21, elastic member; 211, outer fixing ring; 212, elastic segment; 213, spacing; 214, gap; 215, clearance; 22, blocking member; 221, first covering portion; 222, second covering portion; 223, receiving cavity; 30, first foaming assembly; 31, first foaming agent; 32, first coating film; 40, second foaming assembly; 41, second foaming agent; 42, second coating film; 50, first adjustment structure; 60, second adjustment structure.

### DETAILED DESCRIPTION

For better understanding and implementation, the technical solutions in the embodiments of the present invention will be clearly and completely described below in combination with the accompanying drawings in the embodiments of the present invention.

In the description of the present application, it should be noted that the orientation or positional relationship indicated by the terms such as "upper", "lower", "front", "rear", "left", "right", "vertical", "horizontal", "top", "bottom", "inner", and "outer" is based on the orientation or positional relationship shown in the accompanying drawings, which is merely for the convenience of describing the present invention and simplifying the description, and does not indicate or imply that the referred device or element must have a specific orientation or be constructed and operated in a specific orientation. Therefore, it may not be understood as a limitation on the present invention.

Unless otherwise defined, all technical and scientific terms used herein have the same meanings as commonly understood by those skilled in the technical field of the present invention. The terms used in the specification of the present application herein are only for the purpose of describing specific embodiments and are not intended to limit the present invention.

The present invention will be described in further detail below in combination with the accompanying drawings.

### Embodiment 1

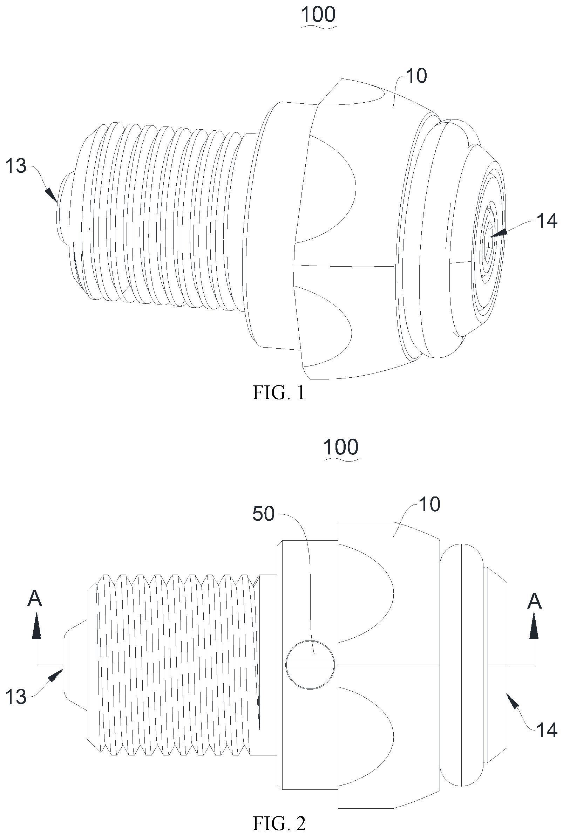

Referring to FIGS. 1 to 4, a connector 100 with over-temperature and over-flow protection structure provided in Embodiment 1 of the present invention includes a housing 10 and an over-temperature and over-flow protection structure 20.

The housing 10 is provided with an airflow channel 11, an air inlet 14, and an air outlet 13; the over-temperature and over-flow protection structure 20 is provided in the airflow channel 11, including an elastic member 21 and a blocking member 22; an end of the elastic member 21 is abutted against a side wall of the airflow channel 11, and an opposite end of the elastic member 21 is abutted against the blocking member 22; the blocking member 22 is configured to drive the elastic member 21 to undergo elastic deformation in response to an intake flow rate at the air inlet 14 being greater than a preset flow rate, so that at least a flow area of the airflow channel 11 is reduced by the deformation of the elastic member 21, and the airflow channel 11 is blocked by the movement of the blocking member 22; or the blocking member 22 is configured to soften in response to an ambient temperature being greater than a preset temperature, so as to block the airflow channel 11.

In the aforementioned connector 100 with over-temperature and over-flow protection structure, by providing the over-temperature and over-flow protection structure 20 inside the housing 10, the blocking member 22 may drive the elastic member 21 to undergo elastic deformation driven by air pressure in response to the intake flow rate at the air inlet 14 being greater than the preset flow rate, so as to at least reduce the flow area of the airflow channel 11, thereby reducing the amount of gas flowing out from the air outlet 13 and avoiding the risk of severe combustion; simultaneously, the blocking member 22 may soften in response to an external ambient temperature being greater than the preset temperature, may fill the airflow channel 11, and may block the airflow channel 11, cutting off the outflow of gas from the air outlet 13; thus, protection may be provided in response to the ambient temperature being too high, avoiding the risk of severe explosion and ensuring user safety.

It is to be understood that, by being configured to include the elastic member 21 and the blocking member 22, the over-temperature and over-flow protection structure 20 in the present embodiment may achieve not only over-temperature protection but also over-flow protection, having dual protection functions, making the overall structure of the connector 100 with over-temperature and over-flow protection structure simple and easy to install.

When providing the airflow channel 11 in the housing 10, the airflow channel 11 is provided along the axial direction of the housing 10, the air inlet 14 is provided at an end of the housing 10, and the air outlet 13 is provided at an opposite end of the housing 10.

It should be noted that, driving the elastic member 21 to undergo elastic deformation in response to the intake flow rate at the air inlet 14 being greater than the preset flow rate, so as to at least reduce the gas output from the air outlet 13, refers to reducing the gas flow rate of the airflow channel 11 in one implementation, and may refer to the gas flow rate of the airflow channel 11 being reduced to zero in another implementation. The blocking member 22 softening and blocking the airflow channel 11 in response to the ambient temperature being greater than the preset temperature refers to cutting off the gas flow rate across the entire cross-section of the airflow channel 11.

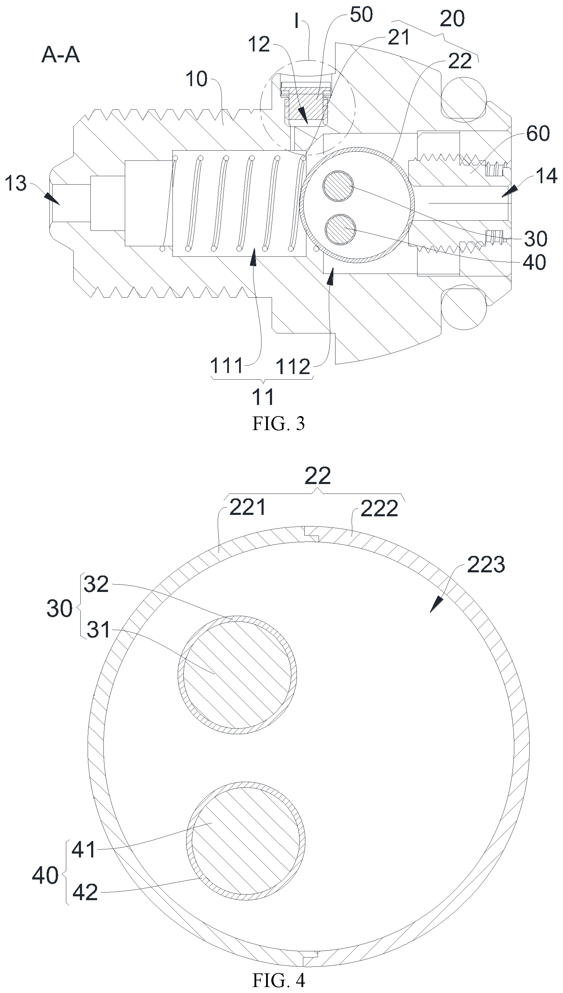

Referring to FIG. 3, in the present embodiment, when achieving over-flow protection, the airflow channel 11 includes a first section 111 and a second section 112; an inner diameter of the first section 111 is configured to be smaller than an inner diameter of the second section 112; the elastic member 21 is provided on the first section 111, and the blocking member 22 is movably provided on the second section 112, for moving towards the direction of the first section 111 in response to an intake pressure at the air inlet 14 being greater than a preset pressure, so as to block an opening of the first section 111 facing the second section 112; or for softening in response to an ambient temperature being greater than a preset temperature, so as to block the opening of the first section 111 facing the second section 112; thus, configuring the airflow channel 11 to include the first section 111 and the second section 112 with different inner diameters allows forming a stepped transition surface between them, facilitating the blocking member 22 to block at this stepped transition surface after moving.

Specifically, the blocking member 22 moves towards the direction of the first section 111 driven by airflow pressure in response to a flow rate at the air inlet 14 being greater than the preset flow rate, blocks at an end of the first section 111 with a smaller diameter, and may simultaneously compress the elastic member 21, thereby blocking the airflow channel 11; or the blocking member 22 softens and blocks at the opening of the first section 111 facing the second section 112 in response to the ambient temperature being greater than the preset temperature, thereby blocking the airflow channel 11 and avoiding the risk of severe combustion caused by airflow flowing out from the air outlet 13.

It is to be understood that, to facilitate the installation of the elastic member 21, the airflow channel 11 may include a third section, the third section communicates with the first section 111, and an inner diameter of the third section is configured to be smaller than the inner diameter of the first section 111, thereby forming a stepped surface for the elastic member 21 to abut against at the junction of the two.

In some implementations, the preset flow rate may be set to 2.8m³/h or the preset pressure may be 0.7Mpa; the airflow will push the blocking member 22 to move towards the direction of the first section 111 in response to a gas flow rate flowing in from the air inlet 14 being greater than this preset value; or the blocking member 22 will soften in response to the ambient temperature being greater than 80°C (the preset temperature); the softened and deformed blocking member 22 gradually extends into the first section 111, blocking the first section 111, thereby blocking the airflow channel 11.

Specifically, in the present embodiment, the blocking member 22 is spherical, and contacts the side wall of the airflow channel 11 in an arc shape, having a small contact area; in response to the gas pressure pushing the spherical blocking member 22 to move, the frictional resistance between the spherical blocking member 22 and the side wall of the airflow channel 11 is small, facilitating the blocking member 22 to push the elastic member 21 to move.

The aforementioned connector 100 with over-temperature and over-flow protection structure, by providing the over-temperature and over-flow protection structure 20 inside the housing 10, the blocking member 22 may achieve reducing the flow area of the airflow channel 11 or achieve blocking the airflow channel 11 in response to the intake flow rate at the air inlet 14 being greater than a preset flow rate or the ambient temperature being greater than a preset temperature, so as to reduce or disconnect the gas flow rate at the appliance end, avoiding the occurrence of intense combustion.

### Embodiment 2

Referring to FIGS. 3 and 4, based on Embodiment 1, when the connector 100 with over-temperature and over-flow protection structure in the present embodiment is provided, in order to better achieve blocking the airflow channel 11 in a high-temperature environment and ensure the tightness of blocking the airflow channel 11, a receiving cavity 223 is provided inside the blocking member 22; the connector 100 with over-temperature and over-flow protection structure also includes a first foaming assembly 30 and a second foaming assembly 40, the first foaming assembly 30 and the second foaming assembly 40 are provided in the receiving cavity 223, the melting points of the first foaming assembly 30 and the second foaming assembly 40 are both lower than the melting point of the blocking member 22, and may be set to a preset temperature, the first foaming assembly 30 and the second foaming assembly 40 are configured to foam after mixing to block the airflow channel 11, thereby in the manner where the first foaming assembly 30 and the second foaming assembly 40 are additionally provided inside the blocking member 22, as the external environment temperature rises, the first foaming assembly 30 and the second foaming assembly 40 melt first, then the external blocking member 22 gradually softens, under the blowing of the air pressure at the air inlet 14, the blocking member 22 tumbles inside the airflow channel 11, the first foaming assembly 30 and the second foaming assembly 40 undergo accelerated mixing, and foam and expand, as the ambient temperature continues to rise, reaching the melting point of the blocking member 22, the blocking member 22 melts and fills the airflow channel 11, the first foaming assembly 30 and the second foaming assembly 40 foam and expand and continue to fill the airflow channel 11, blocking the remaining small gaps between the blocking member 22 and the airflow channel 11, achieving dual blocking of the airflow channel 11, ensuring the sealing of the blocking, at which point no gas flows out of the air outlet 13, achieving over-temperature protection.

In the present embodiment, the first foaming assembly 30 includes a first foaming agent 31 and a first coating film 32 coating the first foaming agent 31; the second foaming assembly 40 includes a second foaming agent 41 and a second coating film 42 coating the second foaming agent 41; the melting points of the first coating film 32 and the second coating film 42 are both lower than the melting point of the blocking member 22, where, the melting points of the first coating film 32 and the second coating film 42 may be the same or different; when the melting points of the two may be set to be the same, the preset temperature at this time may be set to 80°C; when the melting points of the two are different, the melting point of one may be set to the preset temperature, and the melting point of the other may be set to be slightly greater than the preset temperature; as such, as the ambient temperature rises, when reaching the preset temperature, the first coating film 32 and the second coating film 42 melt first, allowing the internal first foaming agent 31 and second foaming agent 41 to mix and foam; further, as the ambient temperature rises, the blocking member 22 melts, at which point the foamed material blocks the gas flow channel.

In some implementations, the material of the first coating film 32 and the second coating film 42 is polyurethane, with a melting point of about 80°C; the material of the first foaming agent 31 includes: polyether polyol, polymer polyol, polyether carbonate, catalyst, flame retardant; the material of the second foaming agent 41 includes isocyanate; the blocking member 22 in the present embodiment may be set as polypropylene; in response to the external environment reaching 80°C, the first coating film 32 and the second coating film 42 gradually melt, the blocking member 22 gradually softens; as the ambient temperature further rises, for example reaching approximately 115°C-150°C, the blocking member 22 will gradually melt into a fluid state, and fill the airflow channel 11, thereby achieving a blocking effect; simultaneously, in response to the blocking member 22 melting, the first foaming agent 31 and the first foaming agent 31 mix and foam, the volume expands and becomes larger filling the airflow channel 11, achieving a tighter blocking effect.

Further, in the present embodiment, the weight ratio range of the first foaming agent 31 to the second foaming agent 41 is 1:1 to 1:2; as such, through this mass ratio setting method, the two foaming agents may achieve a rapid mixing and foaming effect, for example, may rapidly foam within 5 minutes, rapidly achieving blocking of the gas flow channel, allowing the user to have escape time.

The blocking member 22 in the present embodiment may be set as polypropylene; in response to the external environment reaching 80°C, the blocking member 22 gradually softens, but has not yet reached its melting point.

In the present embodiment, when providing the first foaming assembly 30 and the second foaming assembly 40 inside the blocking member 22, the blocking member 22 includes an independently formed first covering portion 221 and a second covering portion 222, the first covering portion 221 and the second covering portion 222 enclose to form the receiving cavity 223; the independently formed first covering portion 221 and second covering portion 222 facilitate placing the first foaming assembly 30 and the second foaming assembly 40 inside them, subsequently connecting the first covering portion 221 and the second covering portion 222 into a whole, for example, through ultrasonic welding or interference press-fitting for assembly.

It is to be understood that, this over-temperature protection method is an irreversible, one-time use method.

The aforementioned connector 100 with over-temperature and over-flow protection structure, by additionally having the first foaming agent 31 and the second foaming agent 41 inside the blocking member 22, in a high-temperature environment, may not only block the airflow channel 11 through the melting of the blocking member 22, but the first foaming agent 31 and the second foaming agent 41 may also foam and expand after mixing to fill the airflow channel 11, achieving secondary blocking of the airflow channel 11, ensuring the tightness of the blocking of the airflow channel 11.

### Embodiment Three

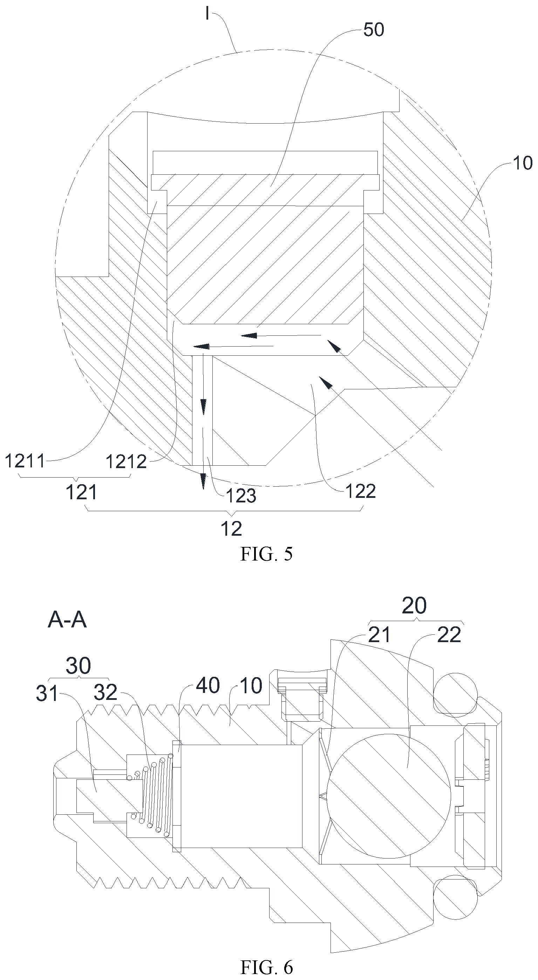

Referring to FIGS. 3 and 5, the structure of the connector 100 with over-temperature and over-flow protection structure in the present embodiment is substantially the same as that of the connector 100 with over-temperature and over-flow protection structure in Embodiment 1 or Embodiment 2, and the differences are as follows:

in the present embodiment, an auxiliary flow channel 12 is provided on the housing 10, the connector 100 with over-temperature and over-flow protection structure also includes a first adjustment structure 50, the auxiliary flow channel 12 communicates between the first section 111 and the second section 112, the first adjustment structure 50 is adjustably provided on the auxiliary flow channel 12, for adjusting the size of the gas flow rate flowing from the first section 111 towards the second section 112 in response to the blocking member 22 blocking the opening of the first section 111, and the flow rate of the auxiliary flow channel 12 is much smaller than the flow rate of the airflow channel 11, so that in response to the blocking member 22 blocking the first section 111, gas flowing in from the air inlet 14 enters the second section 112, then flows into the first section 111 via the auxiliary flow channel 12, and flows out through the air outlet 13, at this time the fire level at the cooker end is very small, the user will turn off the gas stove, but the gas cylinder is in an open state, gas may still continuously flow into the connector 100 with over-temperature and over-flow protection structure, in response to the air pressure inside the connector 100 with over-temperature and over-flow protection structure reaching a balance, the blocking member 22 is driven to return to its original position under the elastic force of the elastic member 21, so as to open the opening of the first section 111. Where, the first adjustment structure 50 is used for adjusting the size of the flow rate of the auxiliary flow channel 12, so as to adjust the length of time for the blocking member 22 to return to its original position.

Specifically, referring to FIG. 5, the auxiliary flow channel 12 includes an installation channel 121, an inflow channel 122, and an outflow channel 123 which communicate with each other, the first adjustment structure 50 is adjustably installed in the installation channel 121, the inflow channel 122 communicates with the second section 112, and the outflow channel 123 communicates with the first section 111, thus, in response to the blocking member 22 blocking the opening of the first section 111 facing the second section 112, airflow may only flow from the inflow channel 122 to the outflow channel 123, and flow out towards the air outlet 13 via the outflow channel 123.

The first adjustment structure 50 in the present embodiment is an adjustment screw, adjusting the flow rate between the inflow channel 122 and the outflow channel 123 by screwing the adjustment screw.

Specifically, when setting the auxiliary flow channel 12 in the present embodiment, in order to be able to form an inflow channel 122 and an outflow channel 123 that communicate with the installation channel 121 at the same position on the housing 10, the extension direction of the inflow channel 122 forms an acute angle with the extension direction of the second section 112, and the extension direction of the outflow channel 123 is arranged perpendicular to the extension direction of the second section 112, thus, by setting the inclined inflow channel 122, when jointly communicating with the installation channel 121 with the outflow channel 123, an installation channel 121 with a smaller cross-section may be set, compared to forming both the inflow channel 122 and the outflow channel 123 in a manner perpendicular to the second section 112, which requires forming an installation channel 121 with a larger cross-sectional area, thus leading to a reduction in the structural strength of the housing 10.

In some implementations, because the inflow channel 122 is set in an inclined manner relative to the second section 112, it needs to be excavated on the housing 10 by a drill bit, therefore, the size of the inflow channel 122 is larger than the size of the outflow channel 123, thereby facilitating the excavation of the inclined inflow channel 122 on the housing 10 by the drill bit by setting the inflow channel 122 with a larger size, and by setting the outflow channel 123 with a smaller size, so that in response to the blocking member 22 blocking the gas flow channel, gas with a smaller flow rate flows out through the outflow channel 123.

In some implementations, when setting the installation channel 121 in the present embodiment, the installation channel 121 includes an outer section 1211 and an inner section 1212, the inner section 1211 communicates with the inflow channel 122 and the outflow channel 123, and the size of the outer section 1211 is larger than the size of the inner section 1211, thus, by setting the outer section 1211 with a larger size, it may be adapted to the size when the screw is installed on the housing 10, while facilitating the excavation of the inclined inflow channel 122 by the drill bit; by setting the inner section 1212 with a smaller size, the structural strength of the housing 10 may be ensured.

It may be understood that in response to the blocking member 22 softening and filling the first section 111, it may block the channel port of the outflow channel 123, and after the first foaming assembly 30 and the second foaming assembly 40 foam and expand, they may also block the channel port of the inflow channel 122. The auxiliary flow channel 12 and the first adjustment structure 50 of the present embodiment are applicable when the intake air pressure at the air inlet 14 is greater than a preset pressure and the blocking member 22 is blocking at the opening of the first section 111 facing the second section 112.

The above-described connector 100 with over-temperature and over-flow protection structure, by providing the auxiliary flow channel 12 on the housing 10 and providing the first adjustment structure 50 at the auxiliary flow channel 12, may direct the gas flowing in from the air inlet 14 to the air outlet 13 in response to the blocking member 22 blocking the airflow channel 11, so that in response to the user turning off the cooker end, the air pressure inside the connector 100 with over-temperature and over-flow protection structure may gradually return to a balanced state, so that under the driving of the elastic force of the elastic member 21, the blocking member 22 returns to its original position, achieving the opening of the opening of the first section 111 facing the second section 112, and the blocking member 22 automatically resets, facilitating continued use subsequently.

### Embodiment 4

Referring to FIG. 3, in the present embodiment, on the basis of Embodiment 1, Embodiment 2, or Embodiment 3, the connector 100 with over-temperature and over-flow protection structure further includes a second adjustment structure 60, the second adjustment structure 60 is adjustably provided at the air inlet 14 and abuts against the blocking member 22, configured to drive the blocking member 22 to move, so as to adjust a compression amount of the elastic member 21, specifically, the second adjustment structure 60 in the present embodiment is an adjustment bolt, driving the blocking member 22 to compress or release the elastic member 21 in response to the adjustment bolt rotating relative to a side wall of the air inlet 14, so as to adjust a length of time for the elastic member 21 driving the blocking member 22 to return to an original position in response to the auxiliary flow channel 12 releasing gas and the connector 100 with over-temperature and over-flow protection structure reaching balance.

It is to be understood that, because the adjustment bolt needs gas to flow in, and the adjustment bolt abuts against the blocking member 22, gas flowing from the adjustment bolt flowing to the blocking member 22 being avoided from causing a buzzing sound in response to impact, one end of the adjustment bolt abutting against the blocking member 22 being provided with a pressure relief channel, gas being able to flow out from the pressure relief channel to the second section 112.

The above connector 100 with over-temperature and over-flow protection structure, by providing the second adjustment structure 60 at the air inlet 14, being able to adjust the compression amount of the elastic member 21, thereby adjusting a length of time for the elastic member 21 driving the blocking member 22 opening an opening of the first section 111 facing the second section 112, facilitating the user to use according to their own needs.

### Embodiment 5

Referring to FIGS. 6 to 9, a difference between the connector 100 with over-temperature and over-flow protection structure in the present embodiment and the connector 100 with over-temperature and over-flow protection structure in Embodiment 1, Embodiment 2, or Embodiment 3 lies in that: the elastic member 21 in the present embodiment is an elastic sheet, the airflow channel 11 includes a first section 111 and a second section 112, an inner diameter of the first section 111 is configured to be smaller than an inner diameter of the second section 112, the elastic member 21 is provided at an opening of the first section 111 facing the second section 112; the elastic member 21 includes an outer fixing ring 211 and a plurality of elastic segments 212 provided on the outer fixing ring 211, the plurality of elastic segments 212 may, in response to a pressure at the air inlet 14 being greater than a preset pressure, being driven by the blocking member 22, change from an expanded state to a retracted state, so as to at least achieve a reduction of a flow area of the airflow channel 11, in this way, being driven by the airflow, the blocking member 22 may drive the plurality of elastic segments 212 to adjust from the expanded state to the retracted state, thereby achieving a reduction or disconnection of the flow area of the airflow channel 11, at this time, airflow flowing in from the air inlet 14 may not flow out through the air outlet 13 or may not flow out from the air outlet 13 in large quantities, avoiding a dangerous situation of excessively high flame at a burner end.

Specifically, referring to FIG. 5, in response to the elastic segments 212 being in the retracted state, a gap 215 is formed between every two adjacent elastic segments 212, and the elastic segments 212 may apply an elastic force to the blocking member 22 to restore to the expanded state, in this way, after the blocking member 22 blocks on the elastic sheet, a small amount of airflow flowing in from the air inlet 14 may still flow out through the air outlet 13, at this time, the flame at the burner end is decreasing, the user will turn off the gas source, gas may only flow in from the air inlet 14 but may not flow out from the air outlet 13, in response to the air pressure inside the housing 10 and the air pressure at a gas cylinder end being the same, driven by the elastic force of the elastic segments 212, the blocking member 22 is driven back to the original position, and itself restores to the expanded state, the user may turn on the gas appliance and continue to use.

In some implementations, the elastic sheet in the present embodiment is made of steel material, to ensure its own structural strength and elastic properties, specifically, when forming the elastic sheet, because the elastic segments 212 will bend and retract or bend and expand relative to the outer fixing ring 211, the elastic segments 212 and the outer fixing ring 211 are integrally provided for easy forming. In an initial state, the elastic sheet is flat, forming the elastic segments 212 by cutting the flat elastic sheet.

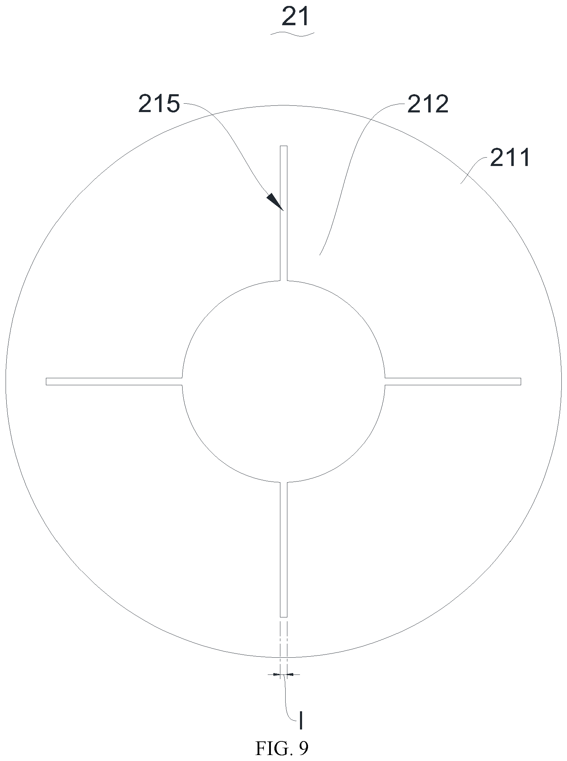

In some implementations, referring to FIG. 9, in response to the elastic segments 212 being in the retracted state, a width 1 of the gap 215 between every two connected elastic segments 212 ranges from 0.1 mm to 0.3 mm, a total area of the plurality of gaps 215 constituting a flow area for fluid after the elastic segments 212 are retracted, in this way, making the size of the gaps 215 not too large, allowing a small amount of gas flowing in from the air inlet 14 to flow out from the air outlet 13 after passing through the gaps 215, at this time the burner end may have a small amount of flame, reminding the user to turn off the burner by the reduction of the flame; also making the size of the gaps 215 not too small, avoiding a situation where gas flows out too little at the burner end to enable combustion.

For example, the width of the gap 215 may be set to values such as 0.1 mm, 0.15 mm, 0.2 mm, 0.25 mm, or 0.3 mm, which are not limited here.

Specifically, four elastic segments 212 are provided in the present embodiment, making the area of each elastic segment 212 not too large, that is, making a connection area between each elastic segment 212 and the outer fixing ring 211 not too large and difficult to undergo elastic deformation, also making the connection area between each elastic segment 212 and the outer fixing ring 211 not too small to have sufficient structural strength, and avoiding the connection area being too small to allow changing from the expanded state to the retracted state under a relatively low air pressure when driven by the blocking member 22.

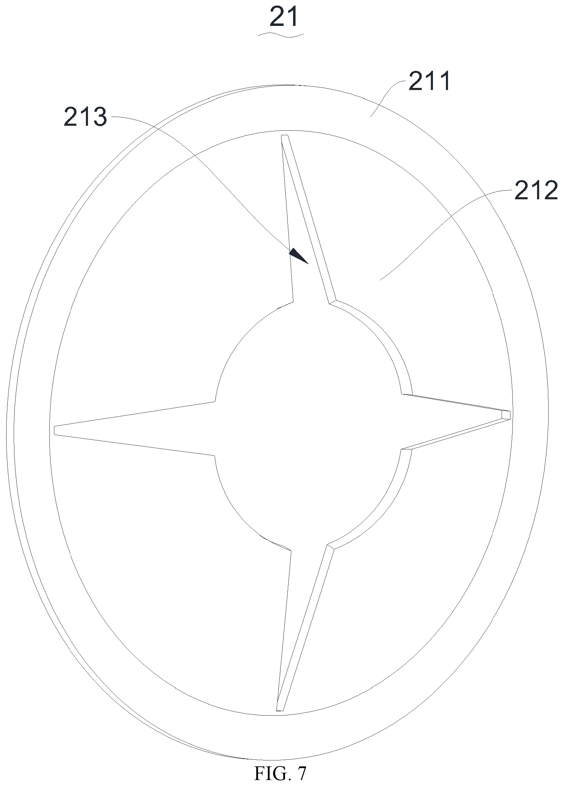

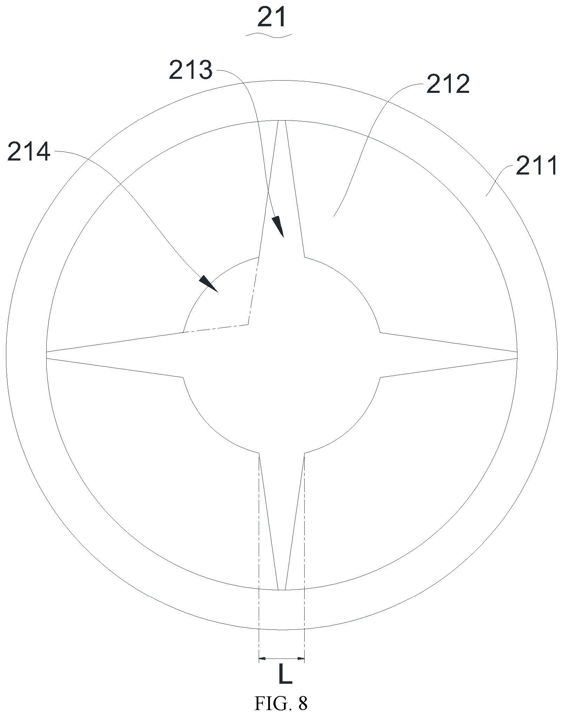

Referring to FIGS. 7 and 8, the width L of the spacing 213 between every two adjacent elastic segments 212 gradually increases from one end connected to the outer fixing ring 211 to one end away from the outer fixing ring 211 in response to the elastic segments 212 being in an expanded state, the width L of the spacing 213 at the position of maximum width between every two adjacent elastic segments 212 is in the range of 0.7 mm to 1 mm in response to the elastic segments 212 being in the expanded state, specifically, the shape of the spacing 213 between every two adjacent elastic segments 212 is similar to a triangle in response to the elastic segments 212 being in the expanded state, equivalent to the length of the base of the triangle being in the range of 0.7 mm to 1 mm, through this range setting, it may be adapted to the intake flow rate of the air inlet 14, so as to ensure that the air inlet 14 may intake a larger flow rate, meeting the usage requirements under normal conditions.

In some implementations, the value of the width L of the spacing 213 at the position of maximum width may be set to values such as 0.7 mm, 0.8 mm, 0.9 mm, 1.0 mm, etc., according to the intake flow rate, which is not limited herein.

Referring to FIG. 8, in an embodiment of the present invention, in order to avoid scratching of the blocking member 22 by the elastic segments 212, one end of each elastic segment 212 away from the outer fixing ring 211 is provided with a notch 214, in this way, in response to the elastic segments 212 being in the expanded state, through the provision of the notch 214, it is equivalent to removing the tip of the elastic segment 212, avoiding the risk of scratching by the tip portion when the elastic segment 212 abuts against the blocking member 22 in a tip manner; in some implementations, through the provision of the notch 214, in response to a plurality of the elastic segments 212 being in the expanded state, part of the blocking member 22 may be located in the notch 214, and have a certain contact area with the elastic segment 212, capable of being in stable contact with the elastic segment 212.

In the aforementioned connector 100 with over-temperature and over-flow protection structure, the elastic member 21 is configured as an elastic sheet, and the elastic sheet includes an outer fixing ring 211 and a plurality of elastic segments 212 provided on the outer fixing ring 211, achieving adjustment of the gas flow rate of the airflow channel 11 through expansion or retraction of the elastic segments 212, simultaneously, in response to the elastic segments 212 being in a retracted state, there is also a gap 215 between the two, so that a small amount of airflow may flow out from the air outlet 13, so as to, in response to the gas appliance end being in a closed state, enable the air pressure inside the housing 10 to reach balance, the elastic sheet may drive the blocking member 22 to return to its original position, thereby achieving an automatic reset function, facilitating user usage.

### Embodiment 6

Embodiment 6 also provides a gas valve, including the aforementioned connector 100 with over-temperature and over-flow protection structure.

In the aforementioned gas valve, since the connector 100 with over-temperature and over-flow protection structure installed in the gas valve is provided with the over-temperature and over-flow protection structure 20, it may achieve a reduction in the flow rate of the airflow channel 11 in response to the flow rate of the air inlet 14 being greater than a preset flow rate, or achieve blocking of the airflow channel 11 in response to the ambient temperature being greater than a preset temperature, so as to avoid the risk of gas violently burning at the gas appliance end.

### Embodiment 7

Embodiment 7 also provides a gas appliance, including the aforementioned gas valve.

In the aforementioned gas appliance, since the gas valve installed on the gas appliance is provided with the over-temperature and over-flow protection structure 20, it may achieve a reduction in the flow rate of the airflow channel 11 in response to the flow rate of the air inlet 14 being greater than a preset flow rate, or achieve blocking of the airflow channel 11 in response to the ambient temperature being greater than a preset temperature, so as to avoid the risk of gas violently burning at the gas appliance end.

The technical means disclosed in the solution of the present invention are not limited to the technical means disclosed in the above-mentioned implementation modes, but also include technical solutions formed by any combination of the above technical features. It should be pointed out that for those of ordinary skill in the art, without departing from the principle of the present invention, several improvements and modifications may also be made, and these improvements and modifications are also considered to be within the protection scope of the present invention.

## Claims

1. A connector (100) with over-temperature and over-flow protection structure, comprising:
a housing (10), wherein the housing (10) is provided with an airflow channel (11), an air inlet (14), and an air outlet (13);
an over-temperature and over-flow protection structure (20), provided in the airflow channel (11), comprising an elastic member (21) and a blocking member (22), wherein an end of the elastic member (21) is abutted against a side wall of the airflow channel (11), and an opposite end of the elastic member (21) is abutted against the blocking member (22), the blocking member (22) being configured to drive the elastic member (21) to undergo elastic deformation in response to an intake flow rate at the air inlet (14) being greater than a preset flow rate, such that, by the deformation of the elastic member (21), at least a reduction in a flow area of the airflow channel (11) is achieved, or, by movement of the blocking member (22), blocking of the airflow channel (11) is achieved; or, the blocking member (22) is configured to soften in response to an ambient temperature being greater than a preset temperature, so as to achieve blocking of the airflow channel (11).

2. The connector (100) with over-temperature and over-flow protection structure according to claim 1, wherein,
the airflow channel (11) comprises a first section (111) and a second section (112), wherein an inner diameter of the first section (111) is configured to be less than that of the second section (112), the first section (111) is arranged facing the air outlet (13), and the second section (112) is arranged facing the air inlet (14);
the elastic member (21) is provided on the first section (111), the blocking member (22) is movably provided on the second section (112), and is configured to move towards the first section (111) in response to the intake flow rate at the air inlet (14) being greater than the preset flow rate, or is configured to soften in response to the ambient temperature being greater than the preset temperature, so as to block an opening of the first section (111) facing the second section (112).

3. The connector (100) with over-temperature and over-flow protection structure according to claim 2, wherein,
an auxiliary flow channel (12) is provided on the housing (10), wherein the auxiliary flow channel (12) communicates between the first section (111) and the second section (112);
the connector (100) with over-temperature and over-flow protection structure also comprises a first adjustment structure (50), wherein the first adjustment structure (50) is adjustably provided on the auxiliary flow channel (12), for adjusting a magnitude of a gas flow rate flowing from the first section (111) to the second section (112).

4. The connector (100) with over-temperature and over-flow protection structure according to claim 1, wherein,
the airflow channel (11) comprises a first section (111) and a second section (112), wherein an inner diameter of the first section (111) is configured to be less than the inner diameter of the second section (112), the first section (111) is arranged facing the air outlet (13), the second section (112) is arranged facing the air inlet (14), and the elastic member (21) is an elastic sheet, and is provided at an opening of the first section (111) facing the second section (112);
the elastic sheet comprises an outer fixing ring (211) and a plurality of elastic segments (212) provided on the outer fixing ring (211), wherein the plurality of elastic segments (212) are configured to change from an expanded state to a retracted state under pushing by the blocking member (22) in response to the intake flow rate at the air inlet (14) being greater than the preset flow rate, so as to at least achieve the reduction in the flow area of the airflow channel (11).

5. The connector (100) with over-temperature and over-flow protection structure according to any one of claims 1 to 4, wherein the blocking member (22) is spherical.

6. The connector (100) with over-temperature and over-flow protection structure according to any one of claims 1 to 4, wherein,
a receiving cavity (223) is provided inside the blocking member (22);
the connector (100) with over-temperature and over-flow protection structure further comprises a first foaming assembly (30) and a second foaming assembly (40), wherein the first foaming assembly (30) and the second foaming assembly (40) are provided in the receiving cavity (223), a melting point of the first foaming assembly (30) and a melting point of the second foaming assembly (40) are both lower than a melting point of the blocking member (22), and the first foaming assembly (30) and the second foaming assembly (40) are configured to foam after mixing, so as to achieve blocking of the airflow channel (11).

7. The connector (100) with over-temperature and over-flow protection structure according to claim 6, wherein the blocking member (22) comprises a first covering portion (221) and a second covering portion (222) that are independently formed, wherein the first covering portion (221) and the second covering portion (222) enclose to form the receiving cavity (223).

8. The connector (100) with over-temperature and over-flow protection structure according to claim 6, wherein,
the first foaming assembly (30) comprises a first foaming agent (31) and a first coating film (32) coating the first foaming agent (31);
the second foaming assembly (40) comprises a second foaming agent (41) and a second coating film (42) coating the second foaming agent (41);
a melting point of the first coating film (32) and a melting point of the second coating film (42) are both lower than the melting point of the blocking member (22).

9. The connector (100) with over-temperature and over-flow protection structure according to claim 8, wherein,
a material of the first foaming agent (31) comprises: polyether polyol, polymer polyol, polyether carbonate, catalyst, and flame retardant;
a material of the second foaming agent (41) comprises isocyanate.

10. The connector (100) with over-temperature and over-flow protection structure according to claim 9, wherein a weight ratio range of the first foaming agent (31) to the second foaming agent (41) is 1:1 to 1:2.

11. The connector (100) with over-temperature and over-flow protection structure according to any one of claims 1 to 4, wherein the connector (100) with over-temperature and over-flow protection structure further comprises a second adjustment structure (60), the second adjustment structure (60) is adjustable and provided at the air inlet (14), abutted against the blocking member (22), and configured to drive the blocking member (22) to move, so as to achieve adjustment of a compression amount of the elastic member (21).

12. A gas valve, comprising the connector (100) with over-temperature and over-flow protection structure according to any one of claims 1 to 11.

13. A gas appliance, comprising the gas valve according to claim 12.
